# EUROPEAN PATENT APPLICATION

(11) **EP 1 757 504 A1**
(43) Date of publication of application: **28.02.2007**
(21) Application number: 05255193.4
(22) Date of filing: 24.08.2005
(51) Int. Cl.: B60T 8/26, B62L 3/08

(54) **Vehicle disk brake system**

(71) Applicant: Kwang Yang Motor Co., Ltd., San-Min Dist., Kaohsiung City (TW)
(72) Inventor: Tung, Kun-Nan, Kaohsiung (TW); Shao, Chien-Lung, Kaohsiung (TW)
(74) Representative: Lacey, Dean Andrew

(57) **Abstract**

A vehicle disk brake system includes a valve unit (2), a control device (3), a front brake unit (4) for braking two front wheels, a rear brake unit (5) for braking two rear wheels, and a conduit unit (6). The valve unit (2) includes a first valve (21) and a second valve (22). The rear brake unit (5) includes a rear hydraulic cylinder (51), and a rear braking disk (52) driven by the rear hydraulic cylinder (51) to brake the rear wheels. A rear brake lever (322) of the control device (3) is operable to force liquid from a rear driving cylinder (321) into the rear hydraulic cylinder (51) via a first liquid chamber (222) in the second valve (22). A pedal (332) of the control device (3) is operable to force liquid from an auxiliary cylinder (31) into the rear hydraulic cylinder (51) via second liquid chambers (213, 223) in the first and second valves (21,22).

## Description

This invention relates to a brake, and more particularly to a disk brake for a four-wheeled vehicle.

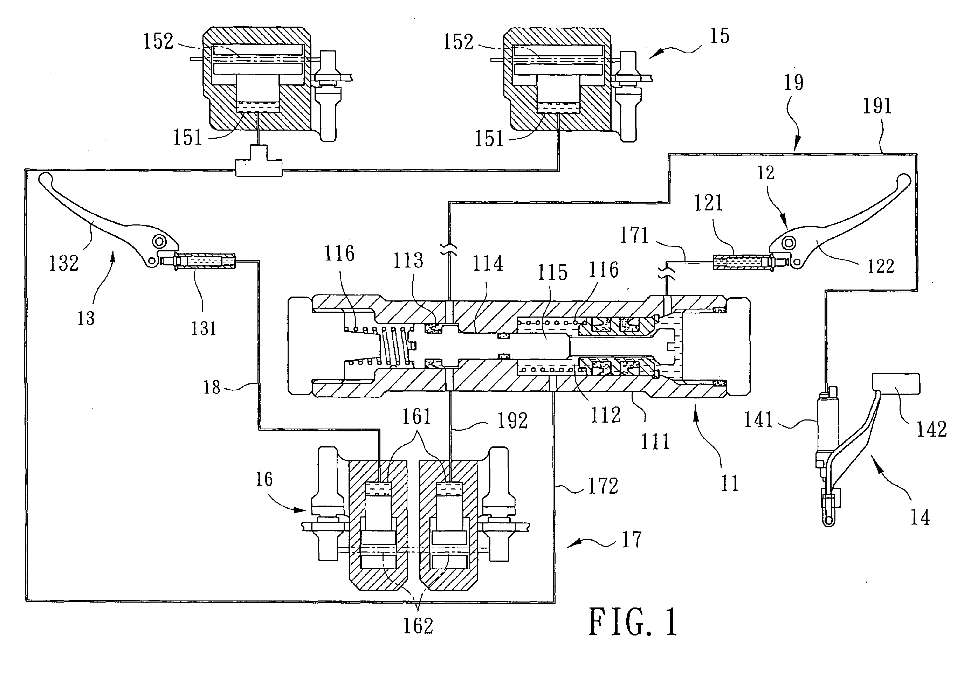

Referring to Fig. 1, a conventional disk brake includes a valve unit 11, a first control unit 12, a second control unit 13, a third control unit 14, a front brake unit 15, a rear brake unit 16, a first conduit 17 having front and rear sections 171, 172, a second conduit 18, and a third conduit 19 having front and rear sections 191, 192. The conventional disk brake is adapted to brake a vehicle having two front wheels and two rear wheels.

The valve unit 11 includes a valve body 111 having first and second liquid chambers 112, 113, a rod-accommodating space 114 disposed between and communicated with the first and second liquid chambers 112, 113, a piston rod 115 extending through and disposed movably within the rod-accommodating space 114, and two coiled compression springs 116 disposed respectively in the first and second liquid chambers 112, 113 for biasing the piston rod 115 toward the first liquid chamber 112.

The first control unit 12 includes a front driving cylinder 121 and a front brake lever 122. The second control unit 13 includes a rear driving cylinder 131 and a rear brake lever 132. The third control unit 14 includes a driving cylinder 141 and a pedal 142 for controlling the driving cylinder 141. The front brake unit 15 includes two front hydraulic cylinders 151 and two front braking disks 152 driven respectively by the front hydraulic cylinders 151 to brake respectively the front wheels. The rear brake unit 16 includes two rear hydraulic cylinders 161 and two rear braking disks 162 driven by the rear hydraulic cylinders 161 to brake respectively the rear wheels.

The front section 171 of the first conduit 17 is communicated with the front driving cylinder 121 and the first liquid chamber 112, while the rear section 172 thereof is communicated with the first liquid chamber 112 and the front hydraulic cylinders 151. The second conduit 18 is communicated with the rear driving cylinder 131 and the left rear hydraulic cylinder 161. The front section 191 of the third conduit 19 is communicated with the driving cylinder 141 of the third control unit 14 and the second liquid chamber 113, while the rear section 192 thereof is communicated with the second liquid chamber 113 and the right rear hydraulic cylinder 161.

The front brake lever 122 is operable to force liquid from the front driving cylinder 121 into the front hydraulic cylinders 151 via a liquid path defined by the front section 171 of the first conduit 17, the first liquid chamber 112, and the rear section 172 of the first conduit 17. Hence, the front wheels slow down or stop.

The rear brake lever 132 is operable to force liquid from the rear driving cylinder 131 into the left rear hydraulic cylinder 161 via the second conduit 18. Hence, the rear wheels slow down or stop.

The pedal 142 is operable to force liquid from the driving cylinder 141 into the right rear hydraulic cylinder 161 via a liquid path defined by the front section 191 of the third conduit 19, the second liquid chamber 113, and the rear section 192 of the third conduit 19. When the amount of the liquid contained within the second liquid chamber 113 reaches a predetermined level, the piston rod 115 moves toward the second liquid chamber 113. This forces liquid from the first liquid chamber 112 into the rear section 172 of the first conduit 17. Hence, the front and rear wheels slow down or stop.

Because the conventional disk brake includes two rear hydraulic cylinders 161 controllable respectively by the rear brake lever 132 and the pedal 142, it suffers from the following disadvantages:
1. The combined size of the rear hydraulic cylinders 161 is too large to allow for reception within the hub of one of the rear wheels. As a result, the rear hydraulic cylinders 161 can only be disposed between the rear wheels, outwardly of the hubs. This gives rise to a need to rearrange other elements disposed between the rear wheels.
2. Because the rear hydraulic cylinders 161 are disposed outwardly of the hubs as described above, when the vehicle travels on uneven road surfaces, the rear hydraulic cylinders 161 may collide with the road surface, thereby causing damage to the rear hydraulic cylinders 161.

Therefore, the object of this invention is to provide a vehicle disk brake that includes a single rear hydraulic cylinder, which can be disposed within one hub.

According to this invention, a vehicle disk brake includes a valve unit, a control device, a front brake unit for braking two front wheels, a rear brake unit for braking two rear wheels, and a conduit unit. The valve unit includes a first valve and a second valve. The rear brake unit includes a rear hydraulic cylinder, and a rear braking disk driven by the rear hydraulic cylinder so as to brake the rear wheels. A rear brake lever of the control device is operable to force liquid from a rear driving cylinder into the rear hydraulic cylinder via a first liquid chamber in the second valve. A pedal of the control device is operable to force liquid from an auxiliary cylinder into the rear hydraulic cylinder via second liquid chambers in the first and second valves.

These and other features and advantages of this invention will become apparent in the following detailed description of the preferred embodiments of this invention, with reference to the accompanying drawings, in which:
Fig. 1 is a schematic view of a conventional vehicle disk brake;
Fig. 2 is a schematic view of the first preferred embodiment of a vehicle disk brake according to this invention shown in a state in which a front brake lever is actuated;
Fig. 3 is a schematic view of the first preferred embodiment shown in a state in which a rear brake lever is actuated;
Fig. 4 is a schematic view of the first preferred embodiment shown in a state in which a pedal is actuated; and
Fig. 5 is a schematic view of the second preferred embodiment of a vehicle disk brake according to this invention.

Before the present invention is described in greater detail in connection with the preferred embodiments, it should be noted that similar elements and structures are designated by like reference numerals throughout the entire disclosure.

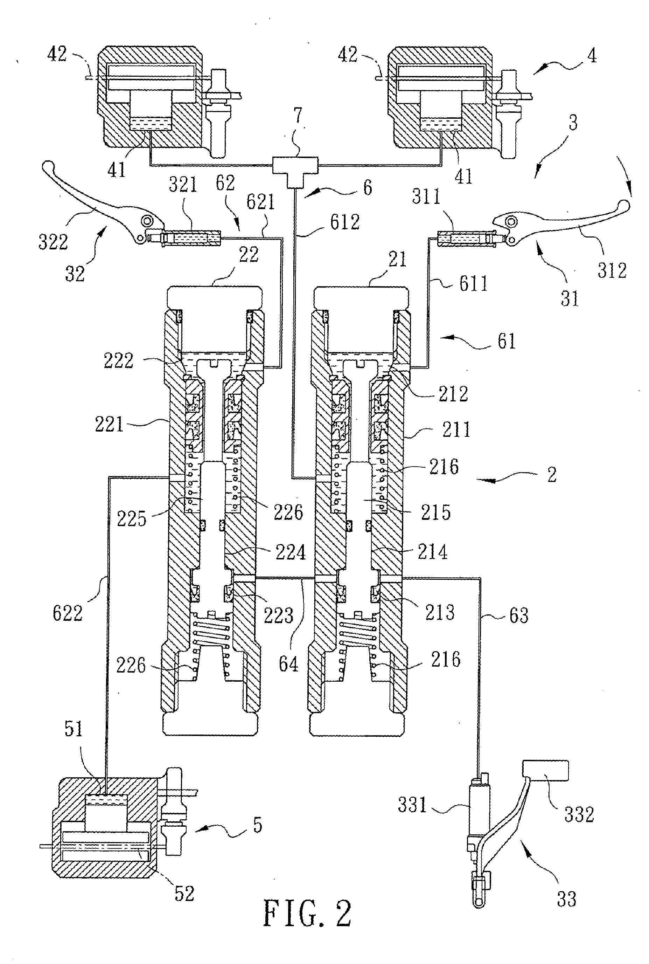

Referring to Fig. 2, the first preferred embodiment of a vehicle disk brake according to this invention is adapted to brake a vehicle. The vehicle includes two front wheels, two rear wheels each having a hub, and a rear axle connected fixedly to the hubs of the rear wheels. The vehicle disk brake includes a valve unit 2, a control device 3, a brake mechanism consisting of a front brake unit 4 for braking the front wheels, and a rear brake unit 5 for braking the rear axle, a conduit unit 6, and a three-way tube 7.

The valve unit 2 includes first and second valves 21, 22. Each of the first and second valves 21, 22 includes a valve body 211, 221 having a first liquid chamber 212, 222, and a second liquid chamber 213, 223 formed respectively in two opposite end portions thereof, a rod-accommodating space 214, 224 disposed between and communicated with the first liquid chamber 212, 222 and the second liquid chamber 213, 223, a piston rod 215, 225 extending through and disposed movably within the rod-accommodating space 214, 224 such that fluid communication between the first liquid chamber 212, 222 and the second liquid chamber 213, 223 is prevented, and a biasing unit for biasing the piston rod 215, 225 toward the first liquid chamber 212, 222. Each of the biasing units includes two coiled compression springs 216, 226 disposed respectively in the first liquid chamber 212, 222 and the second liquid chamber 213, 223 in a corresponding one of the first and second valves 21, 22.

The control device 3 includes first, second, and third control units 31, 32, 33. The first control unit 31 includes a front driving cylinder 311 and a front brake lever 312 for controlling the front driving cylinder 311. The second control unit 32 includes a rear driving cylinder 321 and a rear brake lever 322 for controlling the rear driving cylinder 321. The third control unit 33 includes an auxiliary driving cylinder 331 and a pedal 332 for controlling the auxiliary driving cylinder 331. The control device 3 is operable to force liquid to flow in the valve unit 2 and the conduit unit 6 so as to activate the front brake unit 4 and/or the rear brake unit 5.

The front brake unit 4 includes two front hydraulic cylinders 41 and two front braking disks 42 driven respectively by the hydraulic cylinders 41 to brake respectively the front wheels.

The rear brake unit 5 includes a rear hydraulic cylinder 51, and a rear braking disk 52 driven by the rear hydraulic cylinder 51 to brake the rear axle.

The conduit unit 6 includes first, second, third, and fourth conduits 61, 62, 63, 64.

The first conduit 61 has a front section 611 communicated with the front driving cylinder 311 and the first liquid chamber 212 in the first valve 21, and a rear section 612 communicated with the first liquid chamber 212 in the first valve 21 and the front hydraulic cylinders 41.

The second conduit 62 has a front section 621 communicated with the rear driving cylinder 321 and the first liquid chamber 222 in the second valve 22, and a rear section 622 communicated with the first liquid chamber 222 in the second valve 22 and the rear hydraulic cylinder 51.

The third conduit 63 is communicated with the auxiliary cylinder 331 and the second liquid chamber 213 in the first valve 21.

The fourth conduit 64 is communicated with the second liquid chambers 213, 223 in the first and second valves 21, 22.

The three-way tube 7 has three ends communicated respectively with the rear section 612 of the first conduit 61 and the front hydraulic cylinders 41.

The front brake lever 312 is operable to force liquid from the front driving cylinder 311 into the front hydraulic cylinders 41 via a liquid path defined by the front section 611 of the first conduit 61, the first liquid chamber 212 in the first valve 21, and the rear section 612 of the first conduit 61. Hence, the front wheels slow down or stop.

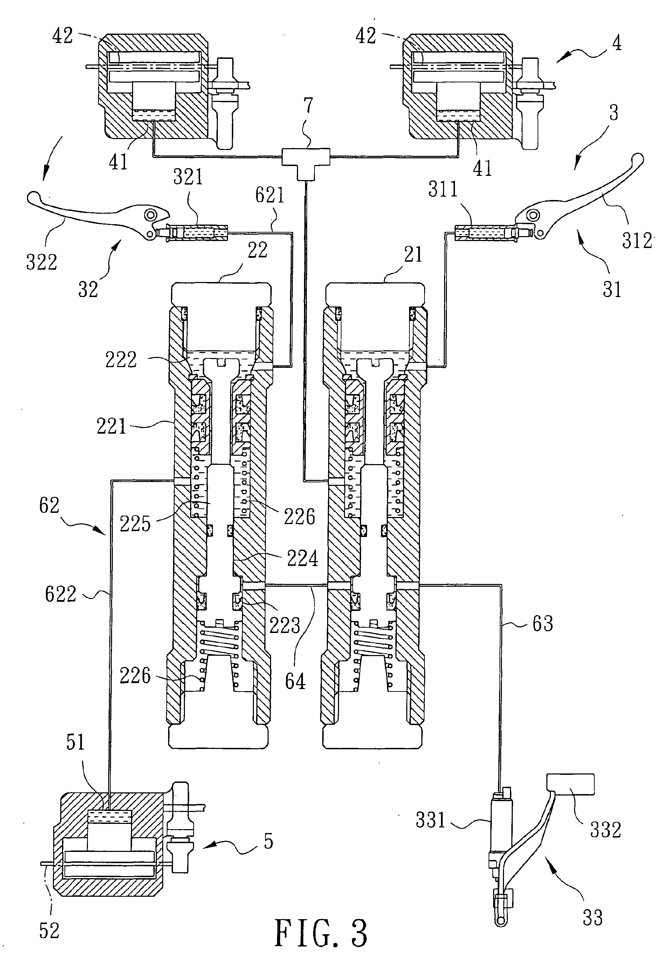

Referring to Fig. 3, the rear brake lever 322 is operable to force liquid from the rear driving cylinder 321 into the rear hydraulic cylinder 51 via a liquid path defined by the front section 621 of the second conduit 62, the first liquid chamber 222 in the second valve 22, and the rear section 622 of the second conduit 62. Hence, the rear wheels slow down or stop.

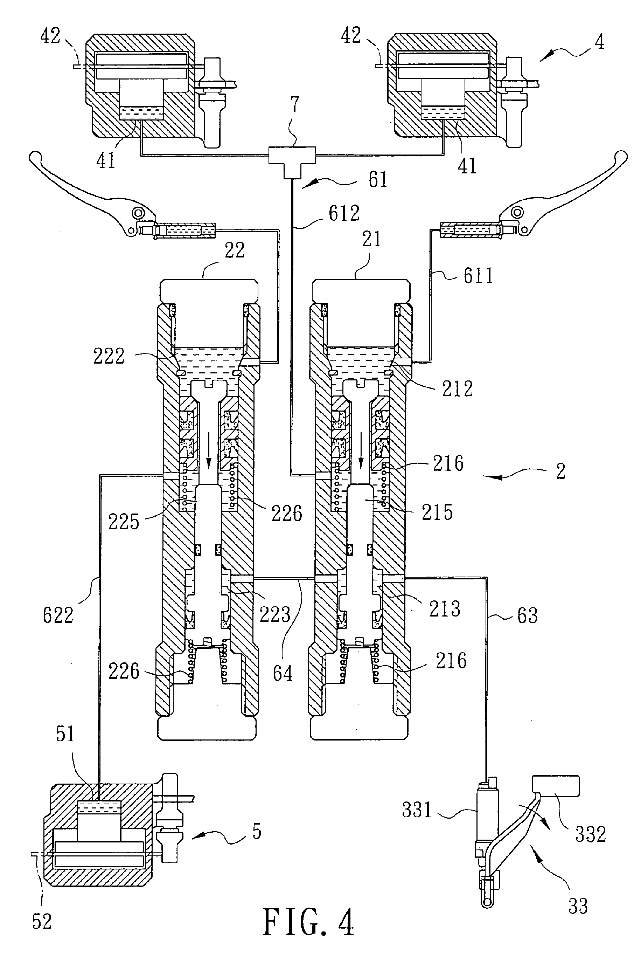

Referring to Fig. 4, the pedal 332 is operable to force liquid from the auxiliary cylinder 331 into the rear hydraulic cylinder 51 via a liquid path defined by the third conduit 63, the second liquid chamber 213 in the first valve 21, the fourth conduit 64, the second liquid chamber 223 in the second valve 22, and the rear section 622 of the second conduit 62.

When the amount of the liquid contained within the second liquid chamber 213 in the first valve 21 reaches a predetermined level, the piston rod 215 moves toward the second liquid chamber 213 in the first valve 21. This forces liquid from the first liquid chamber 212 in the first valve 21 into the rear section 612 of the first conduit 61. Hence, the front and rear wheels slow down or stop.

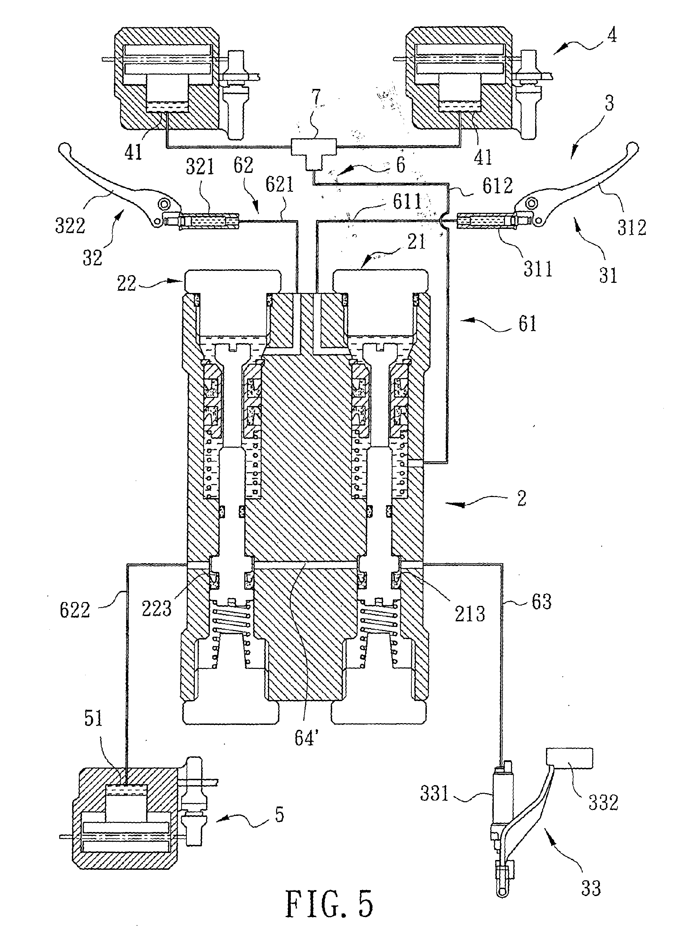

Fig. 5 shows the second preferred embodiment of a vehicle disk brake according to this invention, which is similar in construction to the first preferred embodiment, except that the valve bodies 211, 221 of the first and second valves 21, 22 are formed integrally with each other. In this embodiment, the fourth conduit 64 (see Fig. 2) is omitted. Instead, a connecting passage 64' is formed in an assembly of the first and second valves 21, 22, and is communicated with the second liquid chambers 213, 223 in the first and second valves 21, 22.

The single rear hydraulic cylinder 51 can be disposed within the hub of one rear wheel. In this state, other elements can be easily arranged between the rear wheels, and collision between the rear hydraulic cylinder 51 and the road surface (e.g. , a bump in the road) can be prevented. Thus, the objects of this invention can be achieved.

## Claims

1. A vehicle disk brake adapted to brake a vehicle, the vehicle including two front wheels, two rear wheels each having a hub, and a rear axle connected fixedly to the hubs of the rear wheels, the vehicle disk brake including a valve unit (2), a control device (3), a brake mechanism, and a conduit unit (6), the brake mechanism including a front brake unit (4) for braking the front wheels, and a rear brake unit (5) for braking the rear wheels, the front brake unit (4) including two front hydraulic cylinders (41) and two front braking disks (42) driven respectively by the front hydraulic cylinders (41) to brake respectively the front wheels, the conduit (6) being connected to the valve unit (2), the control device (3), and the front and rear brake units (4, 5), the control device (3) being operable to force liquid to flow in the valve unit (2) and the conduit unit (6) so as to activate the brake mechanism, the control device (3) including a first control unit (31), a second control unit (32), and a third control unit (33), the first control unit (31) including a front driving cylinder (311) and a front brake lever (312), the second control unit (32) including a rear driving cylinder (321) and a rear brake lever (322), the third control unit (33) including an auxiliary driving cylinder (331) and a pedal (332), **characterized by**:
the valve unit (2) including a first valve (21) and a second valve (22), each of the first and second valves (21, 22) including a valve body (211, 221) having a first liquid chamber (212, 222) and a second liquid chamber (213, 223) formed respectively in two opposite end portions thereof, a rod-accommodating space (214, 224) disposed between and communicated with the first liquid chamber (212, 222) and the second liquid chamber (213, 223), a piston rod (215, 225) extending through and disposed movably within the rod-accommodating space (214, 224) such that fluid communication between the first liquid chamber (212, 222) and the second liquid chamber (213, 223) is prevented, and a biasing unit for biasing the piston rod (215, 225) toward the first liquid chamber (212, 222), the second liquid chambers (213, 223) in the first and second valves (21, 22) being communicated with each other;
the rear brake unit (5) including a rear hydraulic cylinder (51), and a rear braking disk (52) driven by the rear hydraulic cylinder (51) to brake the rear wheel;
the conduit unit (6) including a first conduit (61), a second conduit (62), and a third conduit (63), the first conduit (61) having a front section (611) communicated with the front driving cylinder (311) and the first liquid chamber (212) in the first valve (21), and a rear section (612) communicated with the first liquid chamber (212) in the first valve (21) and the front hydraulic cylinders (41), the second conduit (62) having a front section (621) communicated with the rear driving cylinder (321) and the first liquid chamber (222) in the second valve (22), and a rear section (622) communicated with the first liquid chamber (222) in the second valve (22) and the rear hydraulic cylinder (51), the third conduit (63) being communicated with the auxiliary cylinder (331) and one of the second liquid chambers (213, 223) in the first and second valves (21, 22);
the rear brake lever (322) being operable to force liquid from the rear driving cylinder (321) into the rear hydraulic cylinder (51) via a liquid path defined by the front section (621) of the second conduit (62), the first liquid chamber (222) in the second valve (22), and the rear section (622) of the second conduit (62); and
the pedal (332) being operable to force liquid from the auxiliary cylinder (31) into the rear hydraulic cylinder (51) via a liquid path defined by the third conduit (63), the second liquid chambers (213, 223) in the first and second valves (21, 22), and the rear section (622) of the second conduit (62).

2. The vehicle disk brake as claimed in Claim 1, **characterized in that** the valve bodies (211, 221) of the first and second valves (21, 22) are formed integrally with each other.

3. The vehicle disk brake as claimed in Claim 1 or Claim 2, further **characterized by** a three-way tube (7) having three ends communicated respectively with the rear section (612) of the first conduit (61) and the front hydraulic cylinders (41).
